# EUROPEAN PATENT SPECIFICATION

(11) **EP 2 233 335 B1**
(45) Date of publication and mention of the grant of the patent: **30.11.2011**
(21) Application number: 09166928.3
(22) Date of filing: 31.07.2009
(51) Int. Cl.: B60J 7/06

(54) **Driving mechanism for covering canvas of lorries**
Antriebsvorrichtung für LKW-Abdeckplanen
Dispositif d'entraînement pour bâche de camions

(30) Priority: 25.03.2009 EP 09156163
(43) Date of publication of application: 29.09.2010
(73) Proprietor: Marcolin S.r.l., 33170 Pordenone (IT)
(72) Inventor: Davide, Amato, 33070 Maron di Brugnera (Pordenone) (IT)
(74) Representative: Citron, Massimiliano

(56) References cited:
- EP-A- 1 754 618
- EP-A- 1 884 386
- DE-A1- 19 544 619
- JP-A- 59 186 734

## Description

The invention refers to an improved driving operator for covering canvas for vehicles, in particular heavy vehicles such as trucks hereinafter referred to as example.

Regarding trucks, see for example EP 1 884 386, a canvas is used for covering the top-bodytop-bodytop-body. A canvas 11 (fig. 1) is supported by ribs or sliding arcs CT on the board SP of a covering top-body CS which are pulled by a loop of cable CB, one for each side of the top-body, actuated by an electric motor. A description of such cable system is observable for example in EP 1 738 946.

Let's define CTM to describe the head rib that pulls all the other ribs.

Mounted on each foot of the ribs CT is a skid PT for improved sliding on the board SP. Fixed on such skid PT are the ends of the cable that pulls the head rib.

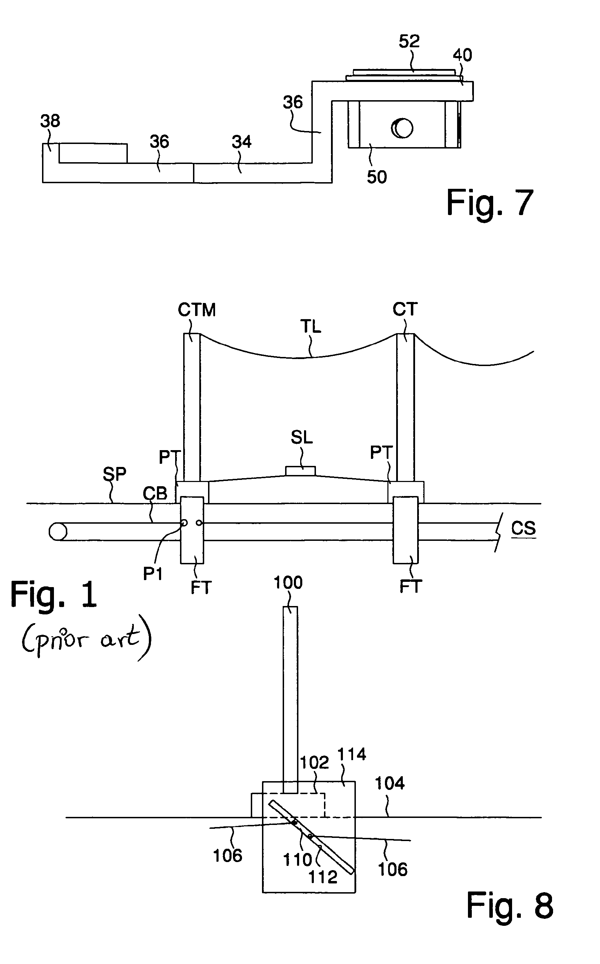

In some covering models, the cables CB are mounted lowered (fig. 1), i.e. the cable CB is fixed to a projecting vertical foot FT mounted on the skid PT. In this manner, the cable CB operates on the skid PT in points below the edge of the edge SP. When the canvas TL is entirely folded against the cab guard, the cable CB remains about 23 mm below the level of the board SP, guaranteeing the integrity of the same in case a scraper bucket impacts the upper part of the board. In the covers with non-lowered cables such cables are located on the skid about 10 mm above the level of the board.

However, lowering the ropes or cables below the level of the board generates a problem regarding the pulling arc CTM. During the movement, the arc becomes a lever whose fulcrum is the board SP, an application point for the force (force arm) is the hooking point P1 of the cable CB and the resistive force, with opposite application point, is the canvas TL being closed.

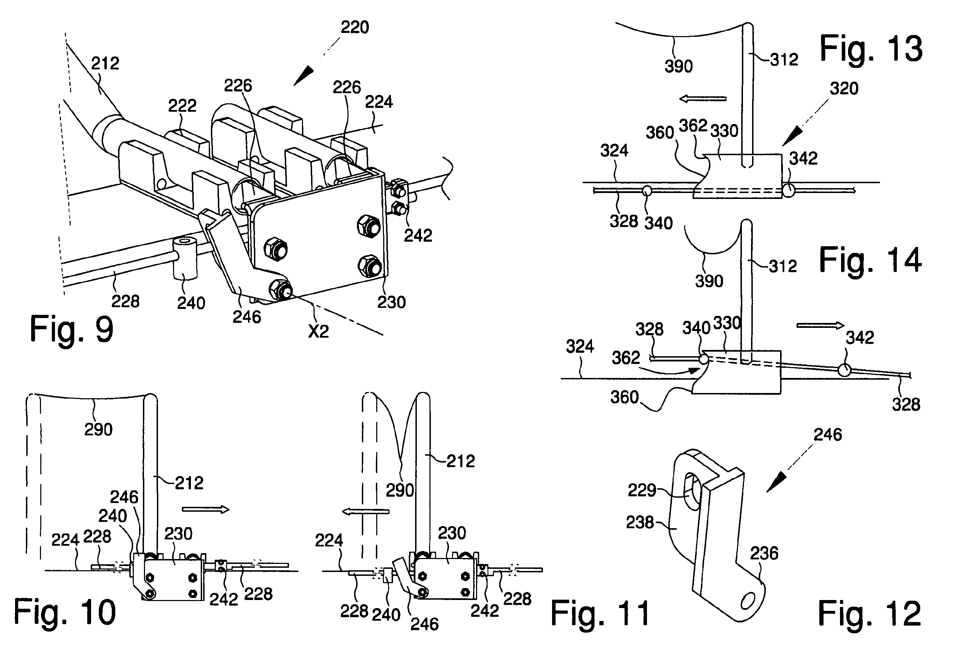

With the lowered cable system, the arc CTM - when the canvas TL is stretched reaching to the end (on the left in fig. 1) - folds, just because the cable CB (through the motor) tends to apply a force during the closure transient Furthermore, in more sophisticated covers, there are systems SL for tensioning the edge of the canvas TL -seefor example fig.9 of EP 18843B6-which by blocking the canvas in stretched position prevent any further stretching thereof and create a further resistive force on the arc CTM which accentuates rotation thereof.

Clearly, the arc CTM should remain perfectly vertical both in closed and open position, as well as during the movements to fold or spread the canvas TL. Above all, in the stretched position of the canvas, an inclined arc CTM creates a belly in the last section of the canvas, thus not only reducing the covering capacity of the canvas but also offering a poorly aesthetic solution.

An object of the invention is to overcome the problem regarding the inclination of the pulling arc CTM.

Such object is attained by means of a driving operator as defined in Claim 1.

Making movable one or each force application point of the cable on the pulling rib allows suitably varying the way the pulling force is applied onto the rib, avoiding creating a lever that tends to slant the pulling rib. It is possible, for example, to vary the thrust direction and/or the lever arm which forms on the rib.

Said application points can be points where the cable is moveably connected or fixed or coupled to the pulling foot, or they can be simple contactpressure points on the pulling foot (i. e., the cable pushes or pulls the pulling foot without being permanently constrained thereto, for example it can slide therein or laterally for a certain length).

In order to save components and energy, the system is preferably designed so that the pulling force itself of the cable varies the position of said application points, for example making a deflecting member to move.

The position of the fixing/coupling or application points may be varied by means of
- a mechanism adapted to vary the position of at least one application point through a remotely-controllable moveable member, e.g. by mounting a cable- or radio-controlled driving operator on the skid of the pulling rib; and/or
- a mechanism adapted to vary the position of at least one application pointthrough a moveable member controlled by the traction force of the cable itself; this simplifies the system and exploits a force already available.

A simple solution may be obtained if at least an end of the cable is movably mounted on the foot of the pulling rib, so that, for the pulling direction of the cable corresponding to the stretching of the canvas, at least the end which is currently pulling moves upwards beyond the or to a point closer to the level of the edge of the board, and/or, for the traction direction of the cable corresponding to the folding of the canvas, at least the end which is currently pulling moves downwards from the edge of the board, i.e. moving away from the dge of the board.
Other variants are defined in the dependent claims.

Generally, it is more advantageous to make both fixing/application points of the cable moveable, even though moving only one still obtains advantages, nevertheless minor (e.g. for only one direction of movement of the canvas).

The invention also comprises the method for making at least one of said two pulling-force application points moveable with respect to the foot of the pulling rib, so that for the traction direction of the cable corresponding to the spreading of the canvas at least the application point which is currently pulling moves upwards beyond or to a point closer to the level of the edge of the board, and/or
for the traction direction of the cable corresponding to the folding of the canvas at least the application point which is currently pulling moves further downwards from the edge of the board, i.e. moving away from the edge of the board.

In preferred variants: (i) the application points are points where the cable is moveably connected to the foot of the pulling rib, or (ii) they are pressure points on the pulling rib.

The invention and its advantages shall be more apparent from the following description of exemplary embodiments and from the attached drawing wherein:
Fig. 1 shows a know prior art actuation system;
Fig. 2 shows a front view of an actuation system according to the invention;
Fig. 3 shows an enlargement of the components inside the circle of fig. 2 in a first configuration;
Fig. 4 shows the components of fig. 3 in a second configuration;
Fig. 5 shows a front three dimensional view of a component in fig. 2;
Fig. 6 shows a rear three dimensional view of the component in fig. 5;
Fig. 7 shows a top view of the component in fig. 5;
Fig. 8 schematically shows a variant of the invention;
Fig. 9 shows an axonometric view of a variant of the invention;
Fig.10 and 11 show a front view of the variant in Fig. 9 in two operative configurations;
Fig. 12 shows an enlarged view of a component of the variant in Fig. 9;
Fig. 13 and 14 show schematically a front view of a fourth variant of the invention in two operative configurations.

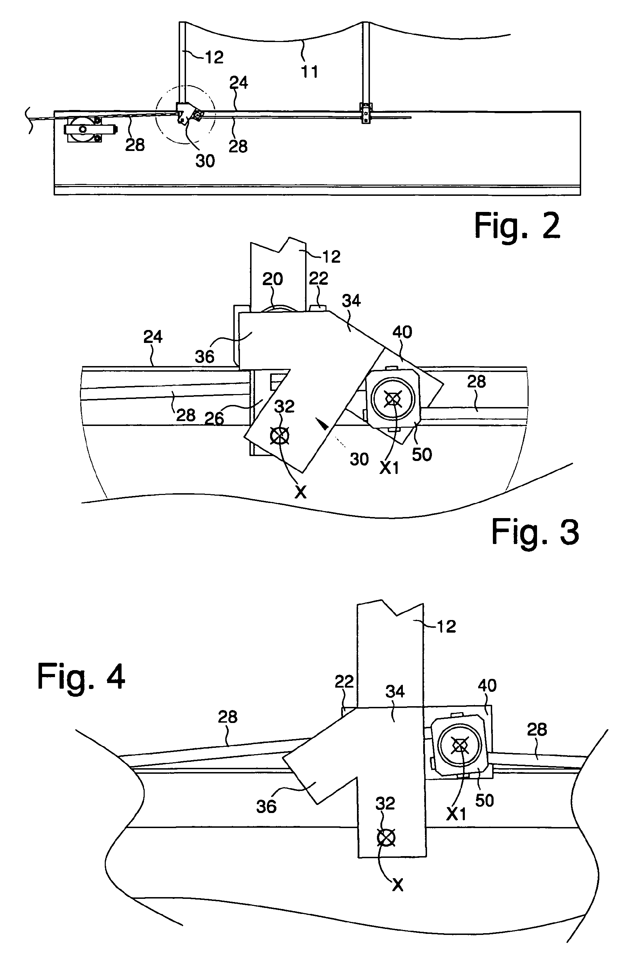

Figures 2-4 show the foot 20 of a rib 12 for pulling a canvas 11 in the actuato according to the invention. The foot 20 is integrally supported by a skid 22 adapted to slide on the board 24 top-body of a truck.

The foot 20 is extended towards the rear part of the top-body by means of an extension or foot 26 (fig. 3), rotatingly coupled - by means of a pin 32 - at the lower end of which is an oscillating bracket 30. The pivoting axis, defined X, is substantially perpendicular to the side of the top-body and hence parallel to the plane containing the pulling rib 12. The bracket 30 may therefore oscillate above the foot 26 remaining within a plane approximately parallel to the side of the top-body.

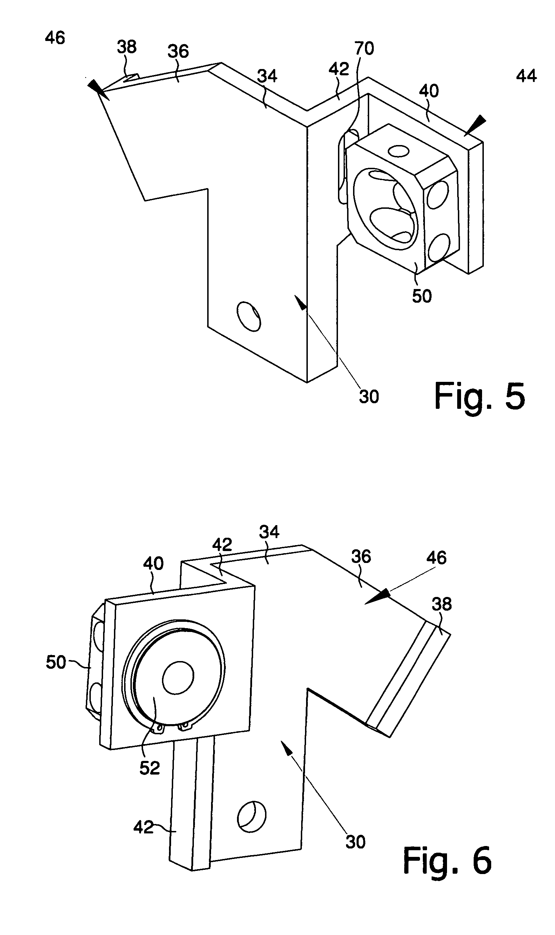

The bracket 30 (see figs. 5-7) is formed by a central flat plate 34 from whose ends opposite to the pivoting point two arms 44, 46 opposite from each other are extended.

The arm 46 is L-shaped, with an initial section 36 of the L-shape coplanar to the plate 30 and slanted by a given angle with respect to the longitudinal axis of the plate 34, and a free orthogonal section 38 of the L-shape which may end up in abutment against a side of the foot 26.

The arm 44 also has an L-shape, but it is extended orthogonally with respect to the plate 34 with a section 42 and ends with a section 40 parallel to the plate 34. The section 42 may end up in abutment against a side of the foot 26, opposite to the side involved by the section 38.

A clamp 50 allowing fixing two ends of the cable 28 adapted to pull the foot 20 in two opposite directions is mounted rotatingly on the section 40 around an axis X1, by means of a pin 52. The cable 28 is loop-mounted on the sides of the top-body in a known manner.

On the section 42 there is an oblong opening 70 into which a section of the cable 28 is fitted.
The invention operates as follows.

When spreading the canvas 11 over the top-body, the cable 28 is actuated to move the pulling rib (leftwards in the figures). The left end of the cable 28 starts exerting a traction force and raises the bracket 30 (fig. 4) towards the position in which the longitudinal axis of the plate 34 is parallel to that of the foot 26. Simultaneously, the section 40 bearing the clamp 50 is raised and the section 42 ends up in abutment on the side of the foot 26 opposite to the traction force. Thus the cable 28 is raised up to the level, or even beyond, of the skid 22 and/or of the board 24. All this obtains the main effect of the traction force of the cable 28, transmitted by means of the clamp 50, having - as the point of application - a point raised with respect to the initial point and closer (if not beyond) the level of the board 24. Therefore, the section 42 transmits the traction force to the foot 26 moving it, but also avoids tilting backwards thereof given that it is hindered by an advantageous lever arm. It should be observed that even though the cable 28 now is closer or above the board 24, the canvas is closed and it is not exposed to the risk of being damaged by a bucket (when used).

When the canvas 11 requires folding instead, the cable 28 is actuated to move the pulling rib in the direction opposite to the previous one (rightwards in the figures). The right end of the cable 28 starts exerting a traction force and lowers (fig. 3) the bracket 30 towards the position in which the longitudinal axis of the plate 34 is slanted by a given angle with respect to that of the foot 26. At the same time, the section 40 bearing the clamp 50 is lowered and the section 38 ends up in abutment on the side of the foot26 opposite to the traction force, further defining the angular travel of the bracket 30. The slanting of the section 38 is such to create an extended contact with the foot 26. Thus, the cable 28 is lowered below the level of the skid 22 and/or of the board 24. Now, the traction force of the cable 28 has - as an application point - a lower point with respect to the previous position and further from the level of the board 24. The section 38 transmits the traction force to the foot 26 moving it, but also avoids tilting backwards thereof given that it is hindered by an advantageous lever arm. It should be observed that with the canvas folded the cable 28 is beneath the board 24: the cable 28 is not exposed to the risk of being damaged by a bucket during operations.

The greater the length of the plate 34 the higher the points of application of the force through the sections 38, 42. It is a question of finding, also through experiments, a compromise between dimensions and performances.

It should be observed that the rotating clamp 50, optional, confers the advantage of following the natural movements of the cable 28 during the oscillation of the bracket 30.

It should also be observed that the opening 70 has an extension greaterthan the movement of the cable 28 above the section 42, so it moves therein without friction.

A variant is shown in fig. 8, wherein the position of the points of application of the force exerted by the cable is varied again depending on the traction direction. The canvas and the other ribs are omitted.

A rib 100 lies on a skid 102 sliding on the board 104 of a top-body. A support 114 is mounted on the skid 102, and in turn mounts a slide 110 sliding in a guide 112, for example rectilinear, and slanted by a given angle (e.g. 45 degrees) with respect to the plane bearing the rib 100 (or the board 104). The ends of a traction cable 106 are fixed at the ends of the slide 110.

Maintaining the same directions for closing and opening the canvas used for the previous variant, it it is observable how the traction of the cable 106 applied to the slide 110 lowers or raises the latter in the guide 112. Therefore, the height of the application points of the force (coinciding with fixing points of the cable) with respect to the skid 102 varies, obtaining the advantages already described above.

In figures 9-11 the foot 220 of a pulling rib 212 can be seen. The foot 220 is integrally supported by a skid 222 adapted to slide on the board 224 of a truck top-body.

The foot 220 is extended outwards and towards the lower part of the top-body by means of an extension or foot 226 curved downwards, to which a bracket 230 is fixed. The bracket 230 is substantially perpendicular to the side of the top-body and slightly spaced therefrom, between the bracket 230 and the side of the trailer there is room enough to allow the sliding of a cable 228. On the cable 228 there are two fixed opposition elements 240, 242 which increase the section thereof. It is preferred making the elements 240, 242 adjustable along the cable 228, for example by means of clamps or knots.

A swinging arm 246 (see detail in fig. 12) is pivotally coupled to the bracket 230, around a pivot axis X2 substantially perpendicular to the side of the top-body.

The arm 246 is angularly shaped (fig. 12), with an initial segment 236 for the pivoting coupling to the plate 230 and a free ear 238 orthogonal to the former which has an elongated through-hole (229) and can abut on a side of the plate 230. The cable 228 is inserted and can slide within the hole (229). On the opposite side of the plate 230 there is a hole similar to the hole (229) (not shown). The hole (229) and the opposite one are smaller in size than the near opposition elements 240, 242.
This variant operates as follows.

In the spreading phase of the canvas (fig. 10) the cable 228 is pulled rightwards (see arrow in fig. 10). The element 240 is opposed by the ear 238 and pushes it, causing the rotation of the arm 246, until the ear 238 abuts on the side of the plate 230. At this time, the pulling force of the cable 228 discharges, through the element 240 and the ear 238, on the plate 230 which is, thus, pulled. Due to the rotation of the arm 246, the part of the cable on the left side of the plate 230 has raised higher than the edge of the board 224.

In the folding phase of the canvas (fig. 11) the cable 228 is pulled leftwards. The element 242 abuts on the side of the plate 230 and is opposed by the side hole. At the same time the arm 246 lowers since it is pulled downwards by the cable 228. The overall effect is that the segment of the cable 228 behind the plate 230 is lowered with respect to the board 224 and to the plate 230 itself, so that the impact and thrust point of the element 242 is lower than the level of the rope 228 in the preceding phase. Atthis point the pulling force of the rope 228 discharges, though the element 242, on the plate 230 which is, thus, pulled leftwards.

Another variant can be seen in figures 13-14. A foot 320 of a pulling rib 312 is integrally supported by a skid adapted to slide on the board 324 of a truck top-body.

The foot is extended outwards and towards the lower part of the top-body by means of an extension or foot, to which a bracket 330 is fixed. The bracket 330 is substantially perpendicular to the side of the top-body and slightly spaced therefrom, whereby between the bracket 330 and the side of the top-body there is room to allow the sliding of a cable 328. On the cable 328 there are two fixed opposition elements 340, 342 which increase the section thereof. It is preferred making the elements 340, 342 adjustable along the cable 328, for example by means of damps or knots.

The bracket 330 has, at least on one side thereof, a plane or track 360 tilted with respect to the vertical and which ends at the upper part with a concave seat 362. The element 328 can slide on the tilted plane 360, and the seat 362 is suitably sized to contain it. The tilting of the plane 360 is such that, when the element 340 contacts it, it slides towards the upper part of the bracket 330, into the seat 362. On the other side of the bracket 330 there is a vertical slot in which the cable 328 slides until its blocking therein, due to the opposing action of the element 342. The plane 360 can be made, for example, by shaping the plate 330, with a template or a dedicated member.
This variant operates as follows.

In the folding phase of the canvas (fig. 13) the cable 328 is pulled leftwards (see arrow). The element 342 abuts on the side of the bracket 330 and is opposed by the side hole. At this point the pulling force of the cable 328 acts, through the element 342, on the bracket 330 which is, thus, pulled leftwards.

In the spreading phase of the canvas (fig. 14) the cable 328 is pulled rightwards (see arrow). The element 340 contacts the entry or the base of the plane 362, and moves upwards with respect to the bracket 330 to the seat 362 where it remains blocked. Atthis point the pulling force of the cable 328 acts, through the element 340, on the bracket 330 which is pulled. Thanks to the tilted plane 362 it is obtained the raising of the pulling force application point, the element 340, beyond the board 324 a point which is however in an upper location of the bracket 330 with respect to the preceding phase.

## Claims

1. Driving operator for covering canvas (11) for an open top-body, comprising
a group of ribs sliding with their feet on the board (24; 104) of the top-body to support and spread/fold a covering canvas (11) for the top-body,
a loop of cable (28; 106) having two traction-force application points which are adapted to pull a rib (12: 100) of said group, called pulling rib, to move it forwards and backwards on the board,
**characterized in that** it comprises means to vary the position of one or each application point according to the pulling direction of the cable, said means being designed so that, for the pulling direction of
the cable corresponding to the stretching of the canvas, at least the application point which is currently pulling moves upwards beyond the or to a point closer to the level of the edge of the board, and/or,
for the traction direction of the cable corresponding to the folding of the canvas, at least the application from point which is currently pulling moves downwards from the edge of the board, i.e. moving away from the edge of the board.

2. Driving operator according to Claim 1, wherein at least one of the two application points is moveably mounted to the foot (22; 102) of the pulling rib.

3. Driving operator according to Claim 1 or 2, comprising a mechanism adapted to vary the position of at least one application point through a remotely-controllable moveable member

4. Driving operator according to any one of the previous Claims, comprising a mechanism (30) adapted to vary the position of at least one application point through a moveable member controlled by the traction force of the cable itself.

5. Driving operator according to Claim 1, comprising an element (110) mounted sliding on the foot (102) of the pulling rib on which one or two ends of the cable (106) is fixed, the sliding diretrix of the sliding element being slanted with respect to the plane in which the board lies and being such to allow the variation of the position of at least one cable end which is currently pulling.

6. Driving operator according to Claim 4, wherein mounted on the foot of the putting rib is a rotating or oscillating element (30) having rotation axis (X) substantially parallel to the plane in which the board (24) lies and on which one or two ends of the cable (28) is fixed, the angular travel of said element being such to allow variation of the position of at least one cable end which is currently pulling.

7. Driving operator according to claim 6, wherein said rotating or oscillating element is pivoted on an extension (26) which projects from the foot of the pulling rib up to below the edge of the board, said element comprising two abutment surfaces (38, 42) adapted to end up in abutment on opposite sides of the extension (26) in such a manner to limit angular travel thereof.

8. Driving operator according to claim 6 or 7, wherein
the rotating or oscillating element is made up of a bracket (30) comprising
a central plate (34) pivoted at the lower part on the extension, and
two folded lateral arms (44; 46), a curved section of which serving as an abutment surface on the extension.

9. Driving operator according to one of claims 5 to 8, wherein pivoted on said rotating or oscillating or sliding element are fixing means (50) adapted to connect one or two ends of the cable onto the element itself in fixing points having a variable position which is substantially constantly aligned with the respective cable segment (28).

10. Driving operator according to claim 4, **characterized in that** on the foot of the pulling rib is mounted a rotating or oscillating element (30) having rotation axis (X) substantially parallel to the plane in which the board (24) lies, and on the cable (28) there is at least one thickening member integral thereto able to intercept the rotating or oscillating element (30) and move it, the angular stroke of said rotating or oscillating element (30) being such to allow the variation of position of at least one cable end which is currently pulling.

11. Driving operator according to claim 4, **characterized in that** on the cable (28) there is at least one thickening member integral thereto able to slide along an inclined plane provided on the foot of the pulling rib, the stroke of said thickening member along said plane involving the variation of position of the thrust point of the thickening member on said foot.

12. Method for moving a rib (12), called pulling rib, belonging to a group of ribs sliding with their feet on the board (24; 104) of an open top-body to support and spread/fold a covering canvas (11) for the top-body, wherein a loop of cable (28; 106) is used having two traction force application points which are adapted to pull said pulling rib (12: 100) to move it forwards and backwards on the board,
**characterized by**
making at least one of said two pulling-force application points moveable with respect to the foot of the pulling rib, so that, for the traction direction of the cable corresponding to the spreading of the canvas,
at least the application point which is currently pulling moves upwards beyond or to a point closer to the level of the edge of the board, and/or,
for the traction direction of the cable corresponding to the folding of the canvas, at least the application point which is currently pulling moves further downwards from the edge of the board, i.e. moving away from the edge of the board.

13. Method according to Claim 12, **characterized by** movably connecting the cable to the foot of the pulling rib in correspondence of at least one traction-force application point, the traction force of the cable being exploited for varying the position of such application point.

14. Method according to Claim 12 or 13, **characterized by** providing the cable with one or more thickenings adapted to exert a thrust on the pulling rib, the traction force of the cable being exploited to vary the position of the thrust point of a or each thickening on the pulling rib.

15. Method according to Claim 14, **characterized by** making at least one thickening cooperate with a movable or oscillating member adapted to vary, upon moving, the position of the thrust point of said thickening on the pulling rib.

## Patentansprüche

1. Antrieb für Abdeckplanen (11) einer offenen Pritsche, bestehend aus einer Einheit verschiebbar geführter Spriegel mit Füßen an der Pritschenwand (24; 104), welche eine Abdeckplane (11) für die Pritsche stützen und ausbreiten/verpacken soll;
einem Seilring (28; 106), der an zwei Zugpunkten gezogen werden kann, um einen Zugspriegel genannten Spriegel (12; 100) dieser Einheit auf der Pritschenwand vor und zurück zu schieben;
**dadurch gekennzeichnet, dass** er Vorrichtungen enthält, welche je nach Zugrichtung dieser Vorrichtungen die Position eines oder aller Befestigungspunkte ändert. Diese Vorrichtung ist so aufgebaut, dass sich zumindest der Befestigungspunkt beim Ziehen in die Zugrichtung des Seils für die Planenausbreitung nach oben, über oder in den Punkt verschiebt, der sich am nahsten am Rand der Pritschenwand befindet, und/oder
beim Ziehen in die Zugrichtung des Seils für die Planenverpackung unter den Rand der Pritschenwand bewegt und sich somit von diesem Rand weg bewegt.

2. Antrieb nach Anspruch 1, bei dem zumindest einer der beiden Befestigungspunkte auf bewegliche Weise am Fuß (22; 102) des Zugspriegels montiert ist.

3. Antrieb nach Anspruch 1 oder 2, bestehend aus einem Mechanismus zur Änderung der Position von mindestens einem der beiden Befestigungspunkte mittels eines fernsteuerbaren mobilen Organs.

4. Antrieb nach einem der vorherigen Ansprüche, bestehend aus einem Mechanismus (30) zur Änderung der Position von mindestens einem der beiden Befestigungspunkte mittels eines mobilen Organs (30), das von der Zugkraft des Seils gesteuert wird.

5. Antrieb nach Anspruch 4, bestehend aus einem Element (110), das verschiebbar geführt auf dem Fuß (102) des Zugspriegels montiert ist, auf dem es mit einem oder zwei Seilschlingen (106) befestigt ist. Die Gleitrichtung des verschiebbaren Elements ist im Vergleich zu der auf der Wand aufliegenden Fläche geneigt und so ausgeführt, dass sie beim Ziehen die Änderung der Position von mindestens einer Seilschlinge ermöglicht.

6. Antrieb nach Anspruch 4, bei dem auf dem Fuß des Zugspriegels ein Dreh- oder Schwingelement (30) mit Drehachse (X) montiert ist. Diese verläuft im Wesentlichen parallel zur Fläche, auf der die Wand aufliegt (24) und auf der eine der beiden Seilschlingen (28) befestigt ist, weil der Winkelhub dieses Elements so erfolgt, dass beim Zug die Änderung der Position von mindestens einer Seilschlinge möglich ist.

7. Antrieb nach Anspruch 6, bei dem das Dreh- oder Schwingelement in einer Verlängerung (26) verbolzt ist, die vom Fuß des Zugspriegels bis unter den Rand des Spriegels reicht. Dieses Element besteht aus zwei Anschlagflächen (38, 42), die an den Seiten gegenüber der Verlängerung (26) am Anschlag anliegen, um den Winkelhub zu begrenzen.

8. Antrieb nach Anspruch 6 oder 7, bei dem sich das Dreh- oder Schwingelement aus einem Bügel bildet, bestehend aus
einer zentralen Platte (34), die unten auf der Verlängerung verbolzt ist, und aus zwei zusammengeklappten Seitenarmen (44; 46) mit gebogenem Abschnitt, die als Anschlagfläche auf der Verlängerung dienen.

9. Antrieb nach einem der Ansprüche 5 bis 8, bei dem auf dem genannten Dreh-, Schwing- oder verschiebbare Element drehbare Befestigungsvorrichtungen (50) verbolzt sind, welche eine oder beide Seilschlingen auf dem Element in den Befestigungspunkten verbinden, die unterschiedlich positioniert und im Wesentlichen gleichmäßig mit dem jeweiligen Seilabschnitt ausgerichtet sind.

10. Antrieb nach Anspruch 4, **dadurch gekennzeichnet, dass** auf dem Fuß des Zugspriegels ein Dreh- oder Schwingelement (30) mit Drehachse (X) montiert ist, die im Wesentlichen parallel zur Fläche verläuft, auf der die Wand aufliegt (24). Auf dem Seil (28) befindet sich mindestens ein fest mit dem Seil verbundenes Verdickungselement, welches das Dreh- oder Schwingelement (30) abfängt und verschiebt, weil der Winkelhub dieses Dreh- oder Schwingelements (32) so erfolgt, dass beim Zug die Änderung der Position von mindestens einer Seilschlinge möglich ist.

11. Antrieb nach Anspruch 4, **dadurch gekennzeichnet, dass** auf dem Seil (28) mindestens ein fest mit dem Seil verbundenes Verdickungselement vorhanden ist, das entlang einer geneigten Fläche am Fuß des Zugspriegels verläuft. Der Hub dieses Verdickungselements entlang dieser Fläche führt zur Änderung der Schubpunktposition des Verdickungselements auf dem genannten Fuß.

12. Verfahren zum Verschieben eines als Zugspriegel bezeichneten Spriegels (12), der zu einer Spriegeleinheit gehört, die mit ihren Füßen auf der Wand (24) der offenen Pritsche verschiebbar geführt werden kann, um eine Pritschenplane (11) zu stützen und auszubreiten/zu verpacken. Dazu verwendet man eine Seilschlinge (28) mit zwei Zugpunkten zum Vor- und Zurückschieben des Zugspriegels an der Pritschenwand.
**dadurch gekennzeichnet,**
**dass** es mindestens einen der beiden Zugpunkte im Vergleich zum Fuß des Zugspiegels beweglich macht, sodass sich zumindest der Befestigungspunkt beim Ziehen in die Zugrichtung des Seils für die Planenausbreitung nach oben, über oder in den Punkt bewegt, der sich am nahesten am Rand der Pritschenwand befindet, und/oder
beim Ziehen in die Zugrichtung des Seils für die Planenverpackung unter den Rand der Pritschenwand bewegt und sich somit von diesem Rand weg bewegt.

13. Verfahren nach Anspruch 12, bei dem das Seil zumindest an einem Zugpunkt beweglich am Fuß des Zugspriegels befestigt wird, da die Zugkraft des Seils zum Ändern der Position dieses Befestigungspunkt benutzt wird.

14. Verfahren nach Anspruch 12 oder 13, bei dem das Seil mit einer oder mehreren Verdickungen ausgestattet ist, die eine Schubwirkung auf den Zugspriegel ausüben, da die Zugkraft des Seils zum Ändern der Schubpunktposition eines oder mehrerer Verdickungen auf dem Zugspriegel verwendet wird.

15. Verfahren nach Anspruch 14, bei dem zumindest eine Verdickung mit einem mobilen oder schwingenden Organ zusammenarbeitet, um beim Verschieben die Position dieser Verdickung auf dem Zugspriegel zu verändern.

## Revendications

1. Actionnement pour bâches de couverture (11) d'un caisson à ciel ouvert, comprenant
un ensemble de nervures coulissantes avec leurs propres pieds sur la ridelle (24; 104) du caisson pour soutenir et étendre/replier une bâche de couverture (11) pour le caisson,
un anneau de câble (28; 106) ayant deux points d'application de force de traction en mesure d'entraîner une nervure (12; 100), dite de traction, dudit ensemble pour la déplacer vers l'avant et vers l'arrière sur la ridelle,
**caractérisé en ce qu'**il comprend des pièces permettant de modifier la position d'un ou de chaque point d'application en fonction du sens de traction du câble, lesdits moyens étant configurés de façon à qu'en fonction du sens de traction du câble correspondant à l'extension de la bâche, le point d'application au moins, qui à ce moment donné est tracteur, se déplace vers le haut au-delà ou au point le plus proche du niveau du bord de la ridelle et /ou
en fonction du sens de traction du câble correspondant au repli de la bâche le point d'application au moins, qui à ce moment donné est tracteur, se déplace plus bas que le bord de la ridelle, en s'éloignant ainsi du bord de cette ridelle.

2. Actionnement selon la revendication 1, dans lequel au moins un des deux points d'application est monté et est mobile sur le pied (22; 102) de la nervure de traction.

3. Actionnement selon la revendication 1 ou 2, comprenant un mécanisme en mesure de modifier la position d'au moins un des deux points d'application à l'aide d'un organe mobile contrôlable à distance.

4. Actionnement selon l'une des revendications 1 ??? précédentes, comprenant un mécanisme (30) en mesure de modifier la position d'au moins un des deux points d'application à l'aide d'un organe mobile (30) contrôlé par la force de traction du câble.

5. Actionnement selon la revendication 4, comprenant un élément (110) monté et coulissant sur le pied (102) de la nervure de traction sur laquelle est fixée une ou deux extrémités de câble (106), la directrice de coulissement de l'élément coulissant étant inclinée par rapport au plan où repose la ridelle et permettant la modification de la position d'au moins une cosse de câble, qui à ce moment donné est tracteur.

6. Actionnement selon la revendication 4, où un élément pivotant ou oscillant (30) ayant un axe de rotation (X) fondamentalement parallèle au plan où repose la ridelle (24), est monté sur le pied de la nervure de traction, et sur lequel est fixé une ou deux cosses du câble (28), la course angulaire dudit élément étant apte à permettre la modification de la position d'au moins une cosse de câble, qui à ce moment donné est tracteur.

7. Actionnement selon la revendication 6, où ledit élément pivotant ou oscillant est axé sur une extension (26) qui se prolonge du pied de la nervure de traction jusque sous le bord de la ridelle, ledit élément comprenant deux surfaces de butée (38, 42) en mesure d'aller en butée sur les côtés opposés de l'extension (26) de façon à délimiter sa course angulaire.

8. Actionnement selon la revendication 6 ou 7, où l'élément pivotant ou oscillant est constitué d'un étrier (30) comprenant
une plaque centrale (34) axée inférieurement sur l'extension et
deux bras latéraux (44, 46) repliés, dont un tronçon incurvé sert de surface de butée sur l'extension.

9. Actionnement selon l'une des revendications de 5 à 8, où des pièces de fixations (50) sont axées sur ledit élément pivotant ou oscillant, et sont en mesure de raccorder une ou deux cosses de câbles sur l'élément aux points de fixation qui ont une position variable et fondamentalement constamment alignée sur le segment relatif de câble (28).

10. Actionnement selon la revendication 4, **caractérisé en ce qu'**un élément pivotant ou oscillant (30) ayant un axe de rotation (X) essentiellement parallèle au plan où repose la ridelle (24) est monté sur le pied de la nervure de traction. Le câble (28) porte au moins une cale qui lui est solidaire et en mesure d'intercepter l'élément pivotant ou oscillant (30) pour le déplacer, la course angulaire dudit élément pivotant ou oscillant (30) permettant la modification de la position d'au moins une cosse de câble, qui à ce moment donné est tracteur.

11. Actionnement selon la revendication 4, **caractérisé en ce que** le câble (28) porte au moins une cale qui lui est solidaire en mesure de coulisser sur un plan incliné du pied de la nervure de traction, la course de ladite cale sur ce plan provoquant la modification de la position du point de poussée de la cale sur ledit pied.

12. Méthode pour déplacer une nervure (12), dite de traction, appartenant à un ensemble de nervures coulissantes avec leurs propres pieds sur la ridelle (24) d'un caisson à ciel ouvert pour supporter et étendre/replier une bâche (11) de couverture pour le caisson, où on utilise un anneau de câble (28) ayant deux points d'application de force de traction en mesure de tracter ladite nervure de traction pour la déplacer vers l'avant et l'arrière sur la ridelle,
**caractérisée en ce qu'**elle
rend mobile au moins un des dits points d'application de force de traction par rapport au pied de la nervure de traction, de façon à ce que le point d'application au moins, qui à ce moment donné est tracteur, pour le sens de traction du câble correspondant à l'extension de la bâche, se déplace vers le haut au-delà du ou en un point plus proche du niveau du bord de la ridelle, et/ou
en fonction du sens de traction du câble correspondant au repli de la bâche le point d'application au moins, qui à ce moment donné est tracteur, se déplace plus bas que le bord de la ridelle, en s'éloignant ainsi du bord de cette ridelle.

13. Méthode selon la revendication 12, où on raccorde de façon mobile le câble au pied de la nervure de traction à hauteur d'au moins un point d'application de force de traction, cette force de traction du câble étant exploitée pour modifier la position de ce point d'application.

14. Méthode selon la revendication 12 ou 13, où on munit le câble d'une ou plusieurs cales en mesure d'exercer une poussée sur la nervure de traction, la force de traction du câble étant exploitée pour modifier la position du point de poussée d'une ou de chaque cale sur la nervure de traction.

15. Méthode selon la revendication 14, où on fait coopérer au moins une cale avec un organe mobile ou oscillant en mesure de modifier la position du point de poussée de ladite cale sur la nervure de traction par son déplacement.
